# EUROPEAN PATENT SPECIFICATION

(11) **EP 3 905 888 B1**
(45) Date of publication and mention of the grant of the patent: **26.03.2025**
(21) Application number: 20752737.5
(22) Date of filing: 01.02.2020
(51) Int. Cl.: A23G 3/50, A23G 1/30, A23G 3/34, A23G 3/02, A23G 3/12, A23G 3/54, A23G 3/46, A23G 3/20

(54) **A CONFECTIONERY PRODUCTION METHOD WITH CARAMEL SHELL**
VERFAHREN ZUR HERSTELLUNG VON SÜSSWAREN MIT KARAMELLHÜLLE
PROCÉDÉ DE PRODUCTION DE CONFISERIE AVEC ENVELOPPE CARAMEL

(30) Priority: 06.02.2019 TR 201901817
(43) Date of publication of application: 10.11.2021
(73) Proprietor: Solen Cikolata Gida Sanayi Ve Ticaret Anonim Sirketi, Istanbul (TR)
(72) Inventor: COBAN, Erdogan, Bagcilar/Istanbul (TR)
(74) Representative: Atalay, Baris
(86) International application number: PCT/TR2020/050064
(87) International publication number: WO 2020/162853

(56) References cited:
- EP-A1- 0 589 820
- EP-A1- 0 589 820
- EP-A2- 0 945 069
- EP-A2- 0 945 069
- EP-A2- 0 948 899
- EP-A2- 0 948 899
- WO-A1-2015/131006
- WO-A1-2015/131006
- WO-A1-2015/166451
- WO-A1-2015/166451
- GB-A- 1 483 614
- GB-A- 1 483 614
- US-A1- 2003 075 830
- US-A1- 2003 075 830

## Description

### TECHNICAL FIELD

The present invention relates to a confectionery production method.

### PRIOR ART

The confectionery products are brought to the form of a shell and filled with an edible filling and are packaged and offered for consumption. The centrifuge method is used to produce a confectionery product from a sugar-containing edible mass, for example caramel filled shell form. The heated edible mass is transferred into a mold by predetermined amount and the edible mass with increased fluidity is plastered into the mold with centrifugal force by rotating the mold.

The plastered product cools down in the mold and takes the shell structure, which is a component of the confectionery product, and is ejected from the mold. Edible pieces such as nuts are disposed in the shell-shaped component by means of a depositor, and a filling such as cream completely fills the shell interior volume in a surrounding manner.

US4063864 discloses an apparatus for the production of hollow confections provided with center fillings including conveyor means with centrifugal molds mounted thereon, each mold being fitted with one member of a clutch which moves over a rotary drive comprising the other member of the clutch so that the two clutch members can be brought briefly into engagement for rotating the molds, the two clutch members being displaceable in the conveying direction and being adapted to pull themselves into axial alignment when they engage.

TR201817374 explain a confectionery production method comprising step of supply a semi liquid caramel mass into a rigid compartment of a tray-shaped mold. Invention further comprises the step of engagement of a core with the compartment from an inlet and compressing the caramel mass such that forming a solidified shell between the core and the compartment. The shell is ejected from the compartment by pushing from a base after core has removed from the compartment. Due to the stickiness of the caramel, push from the mold facilitate ejection of the shell structure. Further examples of methods and systems of producing hollow confections can be found in WO 2015/131006, GB 1 483 614, US 2003/075830, EP 0 948 899, EP 0 945 069, WO 2015/166451, and EP 0 589 820.

US 2003/075830 A1 relates to the making confectionery by depositing into a mold or a stamped confectionery shell. Firstly a cooked sugar mass such as caramel is deposited into a mold. Then, a stamp is inserted into the mold and forced the sugar mass to form a shell between the stamp and the sidewalls of the mold and removed vertically to form a cavity. A filling, which can be a confectionery mass that include chocolate and nuts, can be dispensed into the shell cavity and the composition is cooled. The stamp and the mold can be employed as elastomeric, silicone or metallic. The filled shell may be closed by depositing a small volume of a closure mass (i.e. molten chocolate). The filled shell is cooled before depositing the closure.

### BRIEF DESCRIPTION OF THE INVENTION

The present invention is defined by the claims.

The object of the invention is to provide production of a confectionery product protected by a caramel shell with a high structural strength and mostly covering outer part.

In order to achieve above objective, invention relates to a production method of a confectionery product having a caramel shell method comprising the steps of:
a) providing a plastic caramel mass (20) to a base (14) of a cup shaped rigid cavity (12) of a mold (20),
b) forming a caramel shell (3) by at least partially plastering the caramel mass (20) to inner wall by means of forming a depression with a pressure tip (36) of the first core (30) penetrating into the cavity (12),
c) drilling the caramel mass (20) from a base part (28) by means of a carving rod (40) penetrating the cavity (12) subsequent to depression forming step such that pressing to the depression (27) from above with an end portion (46) to reduce thickness of the wall,
d) pressing to the caramel shell (3) to confine the upper edge by means of a peripheral flange (58) of the second core (50) by partial penetration forming a space at the inner edge (13),
e) forming another depression (27) at the center of the base part (28) at a trimming mold (60) by means of a protrusion (54) arranged at the lower end of the second core (50)
f) a conical trimming mold (60) entering the cavity (12) from the top and being seated in upper opening (29) of the caramel shell (3) forming a tapered edge (21) towards the upper opening (29) provided at an outer periphery,
g) providing a whole nut (72) in the lower part (24) aligned with the depression (27), and
h) filling inside the cavity (12) of the caramel shell (3) with a filler (90).

Filler is preferably a viscous or semi-viscous edible filler such e.g. chocolate. The core forms a depression on the inner wall of the caramel mass and plastering provide obtaining a caramel shell having high structural strength.

Thickness reduction of the wall of the one-piece shell while preserving its structural integrity was possible by the step of drilling the caramel mass from a base part by means of a carving rod penetrating the cavity subsequent to plastering process by depression forming with an initial pressure inside a rigid mold cavity, e.g. metal mold. Production of a confectionary having one-piece caramel shell is therefore possible without requirement of a very complex methods such as centrifuge.

In a preferred application, the first core and the carving rod is guided to move only in vertical direction and carving rod is configured to penetrate automatically into the cavity subsequent to the first core leaving the cavity. This allow caramel mass to expand symmetrically inside the cavity. Thinner section of the caramel mass will have a preliminary defined equal thickness value. In order to ensure structural integrity of the caramel shell the thickness value is selected between 0,1 to 2 mm, preferably, 0,5 to 1,5 mm.

In a preferred application, the pressure tip and the end portion are in radial form and the radius of the pressure tip is greater than the radius of the end portion. A preshaped form for caramel shell inside rigid mold is obtained by first core and subsequently inner volume of the pre shaped form is expanded. Gradual expansion ensure preserving structural integrity while caramel mass is tapered to a shell form. In a preferred application, the caramel shell was pressed to confine the upper edge by means of a peripheral flange of the second core by partial penetration forming a space at the inner edge prior to filling step. This increase structural strength of the upper edge of the caramel shell formed by the mold. Additionally, it is possible to seal upper edge inner gap with filler when the filling step is complete. Therefore, base of the confectionery product have the filling material while peripheral walls are consist of solely caramel shell.

In the present invention, another depression is formed at the center of the base part at a trimming mold by means of a protrusion arranged at the lower end of the second core. The center of bottom part of the depression define a housing for disposing another edible part such as whole nut, almond, etc. In a preferred application a whole nut is provided in the lower part aligned with the depression. In this case, the nut, preferably whole nut secured to the shell base and kept embedded inside the shell when the filling material is provided subsequently. Therefore, confectionery product confines the whole nut.

In a preferred application, a predefined pressing force is exerted to the whole nut with a fixing bar penetrating the cavity to secure inside the depression. The pressing force is selected at a value, e.g. 0,05 N, not harming the integrity of the caramel shell.

In a preferred embodiment of the invention, the depth of the cavity is greater than the diameter of the nut. Thus, when the inner part of the caramel shell is filled with filling, the whole nut is completely trapped inside the caramel shell with filling. Insulation from the external environment increases shelf stability of the nut.

In a preferred embodiment of the invention, a conical trimming mold entering the cavity from the top and being seated in upper opening of the caramel shell forms a tapered edge towards the upper opening provided at an outer periphery prior to the filling. The tapered edge allows the filling material to pass easily into the caramel shell during the filling process without any obstruction in the mouth. Thus, during filling of a fluid or semi-fluid filling material into the caramel shell, it is prevented from forming a gap or filling accumulation in the filling in the caramel shell mouth.

In a preferred embodiment of the invention, the trimming mold is essentially made of silicone material. Thus, sticking of the caramel structure forming the caramel shell from the contact part of the mold to the mold is prevented. In a preferred embodiment of the invention, the filler comprises chocolate and its upper level is aligned with an upper wall through which the cavity is opened. Thus, the sizes of each confectionery are close to each other so that they can fit in equal parts in a tray.

In a preferred embodiment of the invention, the process step of forming a pattern comprising chocolate on the filler with a food printer. The patterns creates an area on the filler that can be distinguished visually or by touch. Contrast can be increased by making the patterns in a different type of chocolate than the filler. For example, the patterns can be formed with dark chocolate while the filler is made with milk chocolate.

In a preferred embodiment of the invention, the cavity comprises substantially metal material. The metal material resists the pressure created by the core, making it possible for the caramel to change its plastic shape inside the cavity.

In a preferred embodiment of the invention, the temperature of the caramel mass is between 70-90°C. In a preferred embodiment, the temperature of the caramel mass supplied to the mold is between 70-80°C. These temperatures have been found to reveal the optimal plastic forming physical properties to obtain a thin-walled shell.

In a preferred embodiment of the invention, the mold is cooled in a cooling tunnel to a range of 30-40°C. With cooling, the confectionery product solidifies and becomes suitable for packaging.

### BRIEF DESCRIPTION OF THE FIGURES

Figure 1 is a cross-sectional illustration of the caramel mass placed in the mold with the mold, in the caramel shell production process of the invention.
Figure 2 is a cross-sectional illustration of the process step of printing the caramel mass in the mold.
Figure 3 is a cross-sectional illustration of the hollow process in the caramel mass immersed in a core mold.
Figure 4 is a cross-sectional illustration of the large shell printing process that provides a tapered-walled shell from the caramel mass. Figure 5 is a cross-sectional illustration of the mouth smoothing process of the tapered-walled caramel shell in the mold.
Figure 6 is a representation of the process of placing nuts in a tapered-wall caramel shell in the mold.
Figure 7 is a cross-sectional illustration of the process step of placing the nut in the interior of the caramel shell.
Figure 8 is a representation of the process of pouring chocolate into the caramel shell.
Figure 9 is a representation of the process of printing a chocolate pattern on a chocolate filler in a caramel thin shell with a food printer.

### DETAILED DESCRIPTION OF THE INVENTION

In this detailed description, the inventive subject matter has been described with reference for examples, such that there is no restriction and only to better describe the subject matter.

The patent application TR201813265 which is incorporated herein by reference, discloses a caramel formulation used in the manufacture of confectionery products. Caramel is supplied in a predetermined amount (e.g. 5 grams) in a mold (10), which is disclosed by TR201817374 that is incorporated herein by reference, which contains a plurality of rows of cavities (12) on a fluid caramel mass (20) at a temperature of 90-100°C in a caramel depositor (not shown).

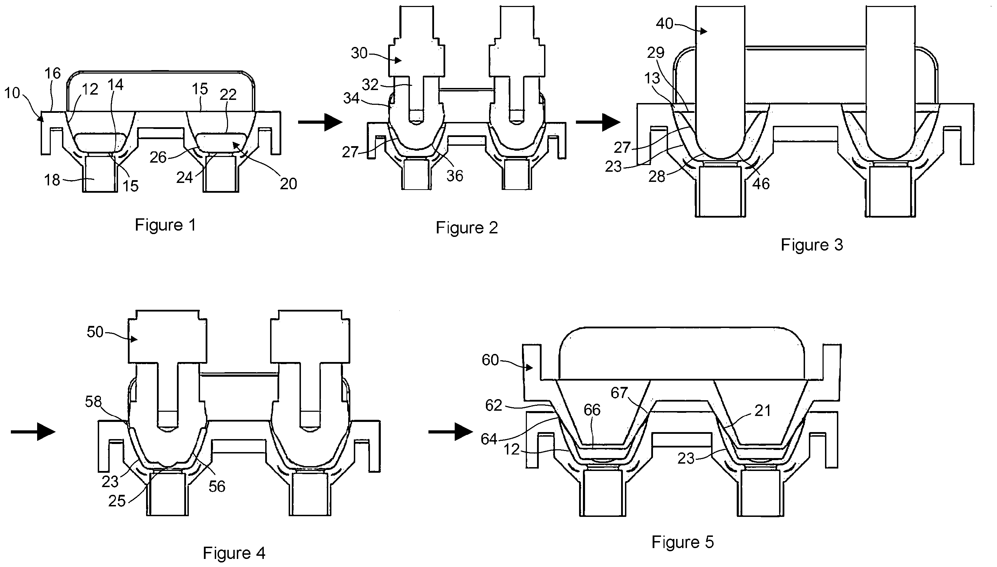

In Figure 1, the mold (10) is shown by taking a cross-section. Each cavity (12) is arranged on a tray adjacent to each other. The cavity (12) comprises V-like angled lateral walls and a horizontal planar base (14) connecting them together. There is a hole at the base (14) connected to a pusher channel (18). In the upper wall (16) of the tray of the mold (10), there is a cavity opening (17) in the form of sequential opening. The inner edge (13) of the cavity (12) is located near the cavity opening (17) and the cavity (12) narrows and reaches the boundaries of the base (14). When the hot caramel mass (20) is supplied from the depositor, it sits on its base (14) from its lower part (24) and rests on the cavity (12) from the sides.

In Figure 2, the cross-section of the mold (10) is shown when the caramel mass (20) is pressed through an upper part (22) by means of a first core (30). The printing is done with the aid of a silicone head (34) at the end of the first core (30). The silicone head (34) comprises a printing tip (36) with a large Radius that contacts the cavity opening (17) from its edges. The printing tip (36) is in convex form, and when immersed in the cavity (12) in a linear motion downwardly against the cavity opening (17), it compresses the hot caramel mass (20), bringing the upper part (22) into a concave depression (27) form. Thus, the hot caramel mass (20) is plastered into the cavity (12), forming a tapered walled shell (3). There is a distance between the height of the plaster and the cavity opening (17). This distance leaves the inner edge (13) free of caramel mass. After this process, the first core (30) is retracted with upward linear motion and leaves the cavity (12).

In Figure 3, in the cross-section of the mold (10), a carving rod (40) is shown in the cavity (12) in a position that presses on the depression (27). The carving rod (40) is in the form of a spherical rounded cylinder with an end portion (46). The linearly guided carving rod (40) enters the cavity (12) by vertical movement. The end portion (46) diameter is smaller than the diameter of the printing tip (36). The end portion (46) proceeds on the depression (27) to create a high pressure relative to the printing tip (36) and thereby carries the depression (27) towards the lower part (24) and forms a base part (28). After this process, the carving rod (40) is pulled upwards in the vertical direction and removed from the cavity (12). Then, the second core (50), which is coaxially aligned with the first core (30) and the carving rod (40), is taken downwards into the cavity (12) in a vertical direction. The second core (50) has a circumferential lateral wall (56) that is widely adjusted relative to the first core (30). When the lateral wall (56) is taken into the cavity (12), there is a distance between the cavity (12) and the lateral wall as much as the thickness of the shell (3). A flange (58) is located in the upper part of the lateral wall (56). The flange (58) width is adjusted to fit the inner edge (13). Thus, when the second core (50) is taken into the cavity (12), the flange (58) limits its circumference from the bottom by pressing the shell (3) from above. On the other hand, the second core (50) comprises a protrusion (54) form in the middle of its lower part. Thus, when the second core (50) is seated inside the cavity (12), it causes both protrusion (54) to be pressed to the caramel mass from the base part (28) and causes it to spread to the base (14) and forms a recess (25) inside the middle of the lower part (24). After this process, the second core (50) is pulled up in the vertical direction and removed from the cavity (12).

In Figure 5, the process of forming the upper edges of the shell (3) by pressing is shown in the cross-section of the mold (10). It comprises a cell (66) corresponding to each cavity (12) on a trimming mold (60) provided in halves and above with the mold (10). Each cell (66) is in V-like form and the width of the widest part is larger than the width of the cavity opening (17). Therefore, when the trimming mold (60) aligned parallel to the mold (10) move down and approach across the mold (10) each cell (66) partially penetrates into the corresponding cavity (12) and pressing edge (64) at the outer periphery of the cell (66) press the mouth portion of the shell (3) in a conical shape so that form a tapered edge (21 ) tapering towards the upper opening (29). The pressing edge (64), which rests on the cavity opening (17) at the upper part, ensures that the trimming mold (60) is stopped when the mold (10) is left with a certain distance. Since the trimming mold (60) gives plastic shape to the caramel mass (20), each cell (66) gives the shape of the truncated conical shape of the upper opening (29) of the caramel mass (20), which takes the form of the shell (3) on which it rests. The trimming mold (60) is lifted up and the cells (66) are removed from the corresponding cavities (12).

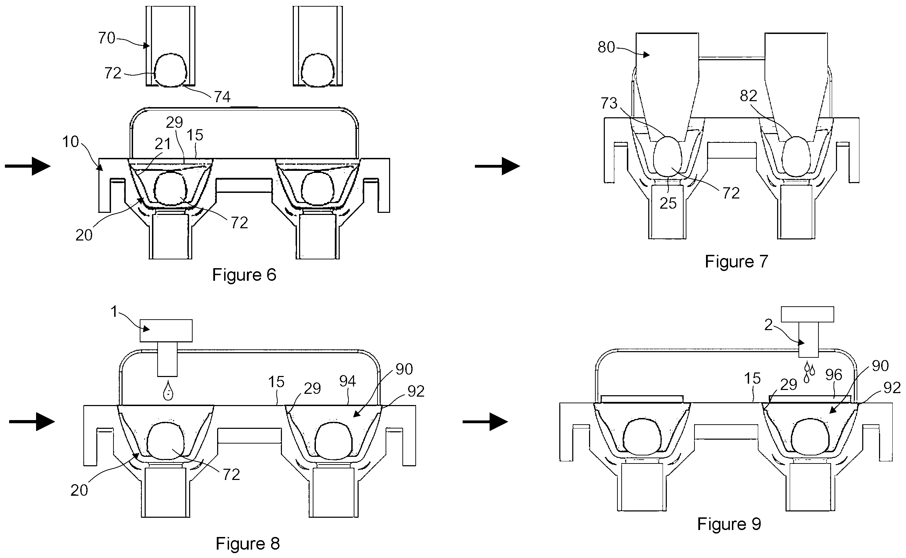

Figure 6 shows the process of supplying nuts to the caramel shell (3), which takes the form of a container with the trimming mold (60). In a conduit (70), the nuts (72) are stored as a whole and in order. The nut (72) is released by free fall from the outlet of the conduit (70) to each cavity (12). The nut (72) is placed in the recess (25) formed at the base part (28). The fixing bar (80) shown in Figure 7 is used to facilitate the attachment of the nut (72) to the shell (3). The fixing bar (80) is vertically aligned with the recess (25) on the cavity (12). At the lower end of the fixing bar (80), a grooved holding part (82) is formed. The fixing bar (80) moves in the vertical direction and the holding part (82) is provided to contact the top of the nut (72). The holding part (82) applies a force (eg. 0,05N) that provides adhesion to the caramel, allowing the nut (72) to be partially embedded in the recess (25). When the fixing bar (80) is taken upwards and removed from the cavity (12), the nut (72) remains stuck in the recess (25). Then, the filling of the shell (3) is made with chocolate filler (90) as shown in Figure 8. The depositor (1 ) pours the hot chocolate into the shell (3) by aligning it with the cavity (12) to fill the cavity
(12) completely. The nut (72) is surrounded by the hot chocolate and is filled to cover the inner edge (13) by closing the upper opening (29). When the filling is completed, the upper surface (94) of the filler (90) is evenly aligned with the upper wall (16). The volume of the inner edge
(13) remaining above the upper opening (29) enables the filler (90) to expand to form a flange part (92). Owing to the upper part of the upper opening (29) being thin, the filler (90) in fluid form fills the cavity (12) without creating a space between the inner edge (13) and the upper opening (29). When the chocolate filler (90), which began to cool, solidifies sufficiently, a food printer (2) is aligned on each cavity (12) and forms a pattern (96) at the top of the filler (90) with chocolate drops. The pattern (96) is in star form. Surprisingly, the star form has been shown to achieve the best surface tension on the solidified filler (90), yet it retains its shape in the state of cooling.

After this process, the mold (10) is taken to a cooling tunnel (not shown) and cooled down to 30°C. The cooled and hardened shell (3) is taken out of the mold (10) by pushing from the bottom of the cavity (12) with the pushing means (not shown) provided in the pusher channel (18).

**REFERENCE NUMBERS**

| | | | |
|---|---|---|---|
| 1 | Depositor | 34 | Head |
| 2 | Food printer | 36 | Printing tip |
| 3 | Shell | 40 | Carving rod |
| 10 | Mold | 46 | End portion |
| 12 | Cavity | 50 | Second core |
| 13 | Inner edge | 54 | Protrusion |
| 14 | Base | 56 | Lateral wall |
| 15 | Inlet opening | 58 | Flange |
| 16 | Upper wall | 60 | Trimming mold |
| 17 | Cavity opening | 62 | Upper part |
| 18 | Pusher channel | 64 | Printing edge |
| 20 | Caramel mass | 66 | Pouch |
| 21 | Tapered edge | 67 | Pressing part |
| 22 | Upper part | 70 | Conduit |
| 23 | Outer periphery | 72 | Nut |
| 24 | Lower part | 80 | Fixing bar |
| 25 | Recess | 82 | Holding part |
| 26 | Lateral part | 90 | Filler |
| 27 | Depression | 92 | Flange part |
| 28 | Base part | 94 | Upper surface |
| 29 | Upper opening | 96 | Pattern |
| 30 | First core | | |
| 32 | Holding extension | | |

## Claims

1. A confectionery production method comprising the steps of:
a) providing a plastic caramel mass (20) to a base (14) of a cup shaped rigid cavity (12) of a mold (20),
b) forming a caramel shell (3) by at least partially plastering the caramel mass (20) to inner wall by means of forming a depression with a pressure tip (36) of the first core (30) penetrating into the cavity (12),
c) drilling the caramel mass (20) from a base part (28) by means of a carving rod (40) penetrating the cavity (12) subsequent to depression forming step such that pressing to the depression (27) from above with an end portion (46) to reduce thickness of the wall,
d) pressing to the caramel shell (3) to confine the upper edge by means of a peripheral flange (58) of the second core (50) by partial penetration forming a space at the inner edge (13),
e) forming another depression (27) at the center of the base part (28) at a trimming mold (60) by means of a protrusion (54) arranged at the lower end of the second core (50)
f) a conical trimming mold (60) entering the cavity (12) from the top and being seated in upper opening (29) of the caramel shell (3) forming a tapered edge (21) towards the upper opening (29) provided at an outer periphery,
g) providing a whole nut (72) in the lower part (24) aligned with the depression (27), and
h) filling inside the cavity (12) of the caramel shell (3) with a filler (90).

2. A confectionery production method according to claim 1, wherein the pressure tip (36) and the end portion (46) are in radial form and the radius of the pressure tip (36) is greater than the radius of the end portion (46).

3. A confectionery production method according to claim 1 or 2, wherein the first core (30) and the carving rod (40) is guided to move only in vertical direction and carving rod (40) is configured to penetrate automatically into the cavity (12) subsequent to the first core (30) leaving the cavity (12).

4. A confectionery production method according to claim 1, comprising the further step of exerting a predefined pressing force to the whole nut (72) with a fixing bar (80) penetrating cavity (12) to secure inside the depression (27).

5. A confectionery product according to claim 1 or 4, wherein the depth of the cavity (12) is greater than the diameter of the nut (72).

6. A confectionery production method according to claim 1, wherein the trimming mold (60) is essentially made of silicone material.

7. A confectionery production method according to any one of the preceding claims, wherein the filler (90) comprises chocolate and its upper level is aligned with an upper wall (16) through which the cavity (12) is opened.

8. A confectionery production method according to any one of the preceding claims, comprising the process step of forming a pattern (96) comprising chocolate on the filler (90) with a food printer (2).

9. A confectionery production method according to any one of the preceding claims, wherein the cavity (12) comprises substantially metal material.

10. A confectionery production method according to any one of the preceding claims, wherein the temperature of the caramel mass (20) is between 70-90°C.

11. A confectionery production method according to any one of the preceding claims, wherein the mold (10) is cooled in a cooling tunnel (4) to a range of 30-40°C.

## Patentansprüche

1. Verfahren zur Herstellung von Süßwaren, umfassend folgende Schritte:
a) Anbringen einer formbaren Karamellmasse (20) an einem Boden (14) eines becherförmigen starren Hohlraums (12) einer Form (20),
b) Ausbilden einer Karamellschale (3) durch zumindest teilweises Verputzen der Karamellmasse (20) an der Innenwand durch Bildung einer Vertiefung mit einer in den Hohlraum (12) eindringenden Druckspitze (36) des ersten Kerns (30),
c) Bohren der Karamellmasse (20) aus einem Basisteil (28) mit Hilfe von einem Schnitzstab (40), die den Hohlraum (12) nach dem Schritt der Bildung der Vertiefung so durchdringt, dass sie von oben mit einem Endabschnitt (46) auf die Vertiefung (27) drückt, um die Dicke der Wand zu verringern,
d) Anpressen an die Karamellschale (3), um den oberen Rand mittels eines Umfangsflansches (58) des zweiten Kerns (50) durch teilweises Eindringen unter Bildung eines Zwischenraums am inneren Rand (13) zu begrenzen,
e) Ausbilden einer weiteren Vertiefung (27) in der Mitte des Basisteils (28) an einer Trimmingsform (60) mittels eines am unteren Ende des zweiten Kerns (50) angeordneten Vorsprungs (54)
f) wobei eine konische Trimmingsform (60), die von oben in den Hohlraum (12) eintritt und in der oberen Öffnung (29) der Karamellschale (3) sitzt, einen sich zur oberen Öffnung (29) hin verjüngenden Rand (21) bildet, der an einem Außenumfang vorgesehen ist,
g) Bereitstellen einer ganzen Nuss (72) im unteren Teil (24), die mit der Vertiefung (27) ausgerichtet ist, und
h) Füllen des Hohlraums (12) der Karamellschale (3) mit einem Füllstoff (90).

2. Verfahren zur Herstellung von Süßwaren nach Anspruch 1, wobei die Druckspitze (36) und der Endabschnitt (46) eine radiale Form aufweisen und der Radius der Druckspitze (36) größer als der Radius des Endabschnitts (46) ist.

3. Verfahren zur Herstellung von Süßwaren nach Anspruch 1 oder 2, wobei der erste Kern (30) und der Schnitzstab (40) so geführt werden, dass sie sich nur in vertikaler Richtung bewegen, und der Schnitzstab (40) so konfiguriert ist, dass er automatisch in den Hohlraum (12) eindringt, nachdem der erste Kern (30) den Hohlraum (12) verlassen hat.

4. Verfahren zur Herstellung von Süßwaren nach Anspruch 1, umfassend den weiteren Schritt des Ausübens einer vordefinierten Presskraft auf die ganze Nuss (72) mit einem Fixierstab (80) der in den Hohlraum (12) eindringt, um ihn in der Vertiefung (27) zu sichern.

5. Verfahren zur Herstellung von Süßwaren nach Anspruch 1 oder 4, wobei die Tiefe des Hohlraums (12) größer ist als der Durchmesser der Nuss (72).

6. Verfahren zur Herstellung von Süßwaren nach Anspruch 1, wobei die Trimmingsform (60) im Wesentlichen aus Silikonmaterial hergestellt ist.

7. Verfahren zur Herstellung von Süßwaren nach irgendeinem der vorhergehenden Ansprüche, wobei der Füllstoff (90) aus Schokolade besteht und sein oberes Niveau mit einer oberen Wand (16) ausgerichtet ist, durch die der Hohlraum (12) geöffnet ist.

8. Verfahren zur Herstellung von Süßwaren nach irgendeinem der vorhergehenden Ansprüche, umfassend den Verfahrensschritt des Ausbildens eines Schokolade enthaltenden Musters (96) auf der Füllung (90) mit einem Lebensmitteldrucker (2).

9. Verfahren zur Herstellung von Süßwaren nach irgendeinem der vorhergehenden Ansprüche, wobei der Hohlraum (12) im Wesentlichen aus metallischem Material besteht.

10. Verfahren zur Herstellung von Süßwaren nach irgendeinem der vorhergehenden Ansprüche, wobei die Temperatur der Karamellmasse (20) zwischen 70°C-90°C liegt.

11. Verfahren zur Herstellung von Süßwaren nach irgendeinem der vorhergehenden Ansprüche, wobei die Form (10) in einem Kühltunnel (4) auf einen Bereich von 30°C-40°C abgekühlt wird.

## Revendications

1. Procédé de production de confiserie comprenant les étapes suivantes:
a) fournir une masse malléable de caramel (20) à une base (14) d'une cavité (12) rigide en forme de coupe d'un moule (20),
b) former une enveloppe de caramel (3) en plâtrant au moins partiellement la masse de caramel (20) sur la paroi intérieure au moyen de la formation d'une dépression avec une pointe de pression (36) du premier noyau (30) pénétrant dans la cavité (12),
c) percer la masse de caramel (20) à partir d'une partie de base (28) à l'aide d'une tige de découpage (40) pénétrant dans la cavité (12) après l'étape de formation de la dépression de manière à appuyer sur la dépression (27) par le haut avec une partie terminale (46) pour réduire l'épaisseur de la paroi,
d) appuyer sur l'enveloppe de caramel (3) pour confiner le bord supérieur au moyen d'un rebord périphérique (58) du second noyau (50) par pénétration partielle formant une espace au niveau du bord intérieur (13),
e) former une autre dépression (27) au centre de la partie de base (28) au niveau d'un moule de découpage (60) au moyen d'une protubérance (54) disposée à l'extrémité inférieure du second noyau (50)
f) un moule conique de découpage (60) pénétrant dans la cavité (12) par le haut et se logeant dans l'ouverture supérieure (29) de l'enveloppe de caramel (3) formant un bord effilé (21) vers l'ouverture supérieure (29) prévue à une périphérie extérieure,
g) fournir une noisette entière (72) dans la partie inférieure (24) alignée avec la dépression (27), et
h) remplir l'intérieur de la cavité (12) de l'enveloppe de caramel (3) avec un produit de remplissage (90).

2. Procédé de production de confiserie selon la revendication 1, dans lequel la pointe de pression (36) et la partie terminale (46) sont de forme radiale et le rayon de la pointe de pression (36) est supérieur au rayon de la partie terminale (46).

3. Procédé de production de confiserie selon la revendication 1 ou 2, dans lequel le premier noyau (30) et la tige de découpage (40) sont guidés pour se déplacer uniquement dans la direction verticale et la tige de découpage (40) est configurée pour pénétrer automatiquement dans la cavité (12) après que le premier noyau (30) a quitté la cavité (12).

4. Procédé de production de confiserie selon la revendication 1, comprenant l'étape supplémentaire consistant à exercer une force de pression prédéfinie sur la noisette entière (72) à l'aide d'une barre de fixation (80) pénétrant dans la cavité (12) pour la fixer à l'intérieur de la dépression (27).

5. Procédé de production de confiserie selon la revendication 1 ou 4, dans lequel la profondeur de la cavité (12) est supérieur au diamètre de la noisette (72).

6. Procédé de production de confiserie selon la revendication 1, dans lequel le moule de découpage (60) est essentiellement constitué d'un matériau en silicone.

7. Procédé de production de confiserie selon l'une quelconque des revendications précédentes, dans lequel le produit de remplissage (90) comprend du chocolat et son niveau supérieur est aligné avec une paroi supérieure (16) à travers laquelle la cavité (12) est ouverte.

8. Procédé de production de confiserie selon l'une quelconque des revendications précédentes, comprenant l'étape consistant à former un motif (96) comprenant du chocolat sur le produit de remplissage (90) à l'aide d'une imprimante alimentaire (2).

9. Procédé de production de confiserie selon l'une quelconque des revendications précédentes, dans lequel la cavité (12) est constituée d'un matériau essentiellement métallique.

10. Procédé de production de confiserie selon l'une quelconque des revendications précédentes, dans lequel la température de la masse de caramel (20) est comprise entre 70°C et 90°C.

11. Procédé de production de confiserie selon l'une des revendications précédentes, dans lequel le moule (10) est refroidi dans un tunnel de refroidissement (4) à une température comprise entre 30°C et 40°C.
